# EUROPÄISCHE PATENTSCHRIFT

(11) **EP 2 962 846 B1**
(45) Veröffentlichungstag und Bekanntmachung des Hinweises auf die Patenterteilung: **28.08.2019**
(21) Anmeldenummer: 14175463.0
(22) Anmeldetag: 02.07.2014
(51) Int. Cl.: B32B 37/00, B32B 37/12, B32B 15/04

(54) **VERFAHREN ZUM AKTIVIEREN EINER OBERFLÄCHE, VERFAHREN ZUM HERSTELLEN EINER KLEBVERBINDUNG UND BAUTEILVERBUND**
METHOD FOR ACTIVATING A SURFACE, METHOD FOR ESTABLISHING AN ADHESIVE CONNECTION AND COMPOSITE COMPONENT
PROCÉDÉ D'ACTIVATION D'UNE SURFACE, PROCÉDÉ DE FABRICATION D'UN JOINT DE COLLE ET COMPOSANT COMPOSITE

(43) Veröffentlichungstag der Anmeldung: 06.01.2016
(73) Patentinhaber: Schmitz Cargobull AG, 48341 Altenberge (DE)
(72) Erfinder: Maier, Christof, 41564 Kaarst (DE)
(74) Vertreter: Cohausz & Florack

(56) Entgegenhaltungen:
- DE-A1- 4 312 926
- DE-A1-102009 017 492
- DE-B4-102004 033 728
- US-A1- 2008 213 612
- DATABASE WPI Week 201442 Thomson Scientific, London, GB; AN 2014-L35296 XP002730692, & WO 2014/087929 A1 (DAIKIN SEISAKUSHO KK) 12. Juni 2014 (2014-06-12)
- DATABASE WPI Week 200952 Thomson Scientific, London, GB; AN 2009-M03705 XP002730693, & WO 2009/093668 A1 (TAISEI PLAS CO LTD) 30. Juli 2009 (2009-07-30)

## Beschreibung

Die Erfindung betrifft ein Verfahren zum Aktivieren einer Oberfläche eines aus einem Metallwerkstoff gefertigten Bauteils, das an der zu aktivierenden Oberfläche eine Oxid- oder Hydroxidschicht trägt, für eine Verklebung mit einem Verbindungspartner, bei dem mittels eines gepulsten Laserstrahls Einsenkungen in die Oberfläche eingebracht werden, um im Bereich der Einsenkungen die zuvor auf der Oberfläche vorhandene Oxid- oder Hydroxidschicht zu entfernen.

Des Weiteren betrifft die Erfindung ein Verfahren zum Herstellen einer Klebverbindung zwischen einander zugeordneten Oberflächen von zwei Bauteilen, von denen mindestens eines aus einem Metallwerkstoff besteht und an seiner dem anderen Bauteil zugeordneten Oberfläche eine Oxid- oder Hydroxidschicht trägt.

Schließlich betrifft die Erfindung auch einen Bauteilverbund, der aus mindestens zwei Bauteilen gebildet ist, von denen mindestens eines aus einem Metallwerkstoff besteht, wobei die Bauteile an einander zugeordneten Oberflächen miteinander verklebt sind.

Mit Ausnahme der Edelmetalle und deren Legierungen bilden Metalle und Metalllegierungen bei Kontakt mit Sauerstoff an ihren freien Oberflächen Oxid- oder Hydroxidschichten. Diese natürlich gewachsenen Schichten entstehen in einem unregelmäßig ablaufenden und nicht genau definierten Prozess.

Dies gilt auch für Leichtmetallwerkstoffe, wie Aluminiumlegierungen, bei denen die sich an Luft bildende festhaftende Oxidschicht die Korrosionsbeständigkeit unterstützt. Allerdings behindern die an Metallbauteilen ohne besondere Vorkehrungen unvermeidbar vorhandenen Oxid- oder Hydroxidschichten ein Verkleben.

Aufgrund der unterschiedlichen Strukturen der Oxidationsprodukte weisen auf Metallbauteilen natürlich gewachsene Oberflächen Poren auf, in denen sich bei Gebrauch Feuchtigkeit einlagert. In Folge dessen entsteht an der Oxid- oder Hydroxidschicht eine hydratisierte Oberflächenschicht, die über eine schlechte Anbindung an das Grundmaterial des Metallwerkstoffs verfügt. Dies wiederum hat zur Folge, dass es zu unvorhersehbaren Ablöseerscheinungen oder Brüchen in der Oxid- oder Hydroxidschicht kommen kann, wenn ein über die Oxid- oder Hydroxidschicht an das Grundmaterial des jeweiligen Metallbauteils angebundener Klebstoff einer ungünstig ausgerichteten oder eine bestimmte Höhe überschreitenden Kraftbelastung ausgesetzt wird. Gefördert wird die Neigung zur adhäsiven Delamination dadurch, dass die heute verfügbaren Klebstoffe in Folge von Feuchtigkeits- und Temperatureinflüssen zur Alterung neigen.

Ein weiteres Problem kann bei der Herstellung einer Klebeverbindung mit einem Metallbauteil dadurch entstehen, dass die auf dem Metallbauteil vorhandene, durch einen natürlichen Vorgang entstandene oder eine gezielte Behandlung erzeugte Oxid- oder Hydroxidschicht die Eignung der jeweiligen Oberfläche zur Benetzung mit einem Kleber verschlechtert.

Soll ein Metallbauteil, insbesondere ein Bauteil aus Leichtmetallwerkstoff, mit einem anderen Bauteil zu einem Bauteilverbund verklebt werden, sind daher zusätzliche Maßnahmen erforderlich, um eine dauerhaft ordnungsgemäße Anbindung des Klebstoffs an die als Klebefläche dienende Oberfläche des jeweiligen Metallbauteils zu gewährleisten.

Eine dieser Maßnahmen besteht darin, die auf der jeweiligen Klebefläche vorhandene Oxidschicht mit Hilfe einer geeigneten Säure zu entfernen. Abgesehen davon, dass diese Säuren in der Regel umwelt- und gesundheitsgefährdend sind, geht mit einer solchen Beizbehandlung unvermeidbar ein Materialabtrag einher.

Alternativ ist es auch möglich, zur Verbesserung der Anhaftung der Verklebung die zu verklebende Fläche mit einer so genannten "Konversionsbeschichtung" zu versehen. Bei aus Al-Werkstoffen bestehenden Bauteilen werden hierzu Konversionsbeschichtungen auf Basis von Titan oder Zirkon eingesetzt.

Besonders hohe Anforderungen an die Klebeverbindung ergeben sich dabei im Bereich von Nutzfahrzeugen, bei denen die Ladefläche an der Oberseite eines aus mehreren miteinander verklebten Schichten gebildeten Bodens ausgebildet ist. Üblicherweise besteht dabei die zuoberst liegende Decklage aus Flachprofilen oder Blechen, die aus Aluminiumwerkstoffen gefertigt sind. Diese Bleche oder Profile sind an ihrer freien Oberseite zur Verbesserung der Rutschsicherheit in der Regel profiliert und an ihrer in der Regel glatten Unterseite mit einer aus Holzwerkstoff bestehenden Tragschicht verklebt. Beim Be- und Entladen wird die Ladefläche von schweren Staplerfahrzeugen befahren mit der Folge, dass die Klebeverbindung zwischen der Decklage und der Traglage hohen dynamischen Schubbelastungen standhalten muss. Gerade bei derartigen Bodenaufbauten ergeben sich aufgrund der Umweltbedingungen, unter denen sie eingesetzt werden, besonders hohe Anforderungen an die Alterungsbeständigkeit der Klebverbindung.

Um eine dauerhaft ordnungsgemäße Anbindung des Klebstoffs zu gewährleisten, hat sich in der Praxis der Auftrag eines speziell auf die Oberflächenbeschaffenheit des jeweiligen Metallbauteils abgestimmter Haftvermittler bewährt, der gleichzeitig eine hohe Affinität zu dem für die Verklebung genutzten Kleber besitzt. Dabei kann, wie in der DE 10 2004 033 728 B4 beschrieben, der Haftvermittler beispielsweise durch eine Nachbehandlung unter Energieeinfluss chemisch umgewandelt werden, um die Haftung des anschließend aufgebrachten Klebers auf der Klebefläche des metallischen Bauteils und damit einhergehend eine dauerhafte Klebeverbindung zwischen den miteinander verbundenen Bauteilen zu sichern.

Unter dem Begriff "Klebstoff" wird hier ein nichtmetallischer Werkstoff verstanden, der Werkstücke durch Oberflächenhaftung (Adhäsion) und innere Festigkeit (Kohäsion) miteinander verbindet. Im Bereich des Nutzfahrzeugbaus kommen dabei insbesondere Klebstoffe auf Basis von Polyurethan oder Acrylat zum Einsatz. Eine große Zahl von Klebstoffen, die für Klebeverbindungen zwischen einem Metallbauteil und einem anderen Bauteil geeignet sind, ist in der schon erwähnten DE 10 2004 033 728 B4 erläutert, auf die zum Beleg des Verständnisses des Fachmanns hinsichtlich der für Anwendungen der hier in Rede stehenden Art in Frage kommenden Klebstoffe Bezug genommen wird.

Die zur Beseitigung der Oxid- oder Hydroxidschicht erforderliche Beizbehandlung, der Auftrag eines zusätzlichen Haftvermittlers in Form eines Primers oder einer Konversionsbeschichtung und die gegebenenfalls erforderliche chemische Nachbehandlung bringen nicht erhebliche Arbeits- und Materialkosten sowie den Einsatz gefährlicher Stoffe, wie Flusssäure und desgleichen, sondern auch verfahrenstechnischen Mehraufwand mit sich, der vergleichbar hohe Kosten für die Herstellung von durch Kleben miteinander verbundenen Bauteilgruppen bedingt.

Neben dem voranstehend erläuterten Stand der Technik ist aus der DE 43 12 926 A1 ein Verfahren zum Aktivieren einer Oberfläche eines aus einem Metallwerkstoff gefertigten Bauteils bekannt, das an der zu aktivierenden Oberfläche eine Oxid- oder Hydroxidschicht trägt. Die Oberflächenaktivierung soll dabei als Vorbereitung für eine Verklebung mit einem Verbindungspartner dienen. Zu diesem Zweck werden mittels eines gepulsten Laserstrahls Einsenkungen in die Oberfläche eingebracht. Dazu wird der Laserstrahl mit einer spezifischen Laserleistung pro Flächeneinheit von 40 - 150 MW/cm² und einer spezifischen Energiedichte von 1 - 30 J/cm² auf die zu behandelnde Oberfläche gerichtet.

Vor dem Hintergrund des voranstehend erläuterten Standes der Technik bestand die Aufgabe der Erfindung darin, ein Verfahren anzugeben, mit dem es auf kostengünstige Weise möglich ist, an einem Metallbauteil eine für eine Verklebung optimal geeignete Oberfläche bereitzustellen.

Ebenso sollte ein Verfahren zur kostengünstigen Herstellung von Baugruppen durch Verkleben von mindestens zwei Bauteilen angegeben werden, von denen mindestens eines aus einem Metallwerkstoff besteht.

Schließlich sollte ein kostengünstig herstellbarer Bauteilverbund geschaffen werden, bei dem eine dauerhaft sichere Verklebung der Bauteile auch unter hohen Belastungen gewährleistet ist.

In Bezug auf das Verfahren zur Bereitstellung eines Bauteils mit einer für eine Verklebung besonders gut geeigneten Oberfläche hat die Erfindung diese Aufgabe dadurch gelöst, dass die betreffende Oberfläche in der in Anspruch 1 angegebenen Weise aktiviert wird.

Unter Anwendung des erfindungsgemäßen Verfahrens zur Oberflächenaktivierung lassen sich mit dem in Anspruch 10 angegebenen Verfahren zur Herstellung einer Klebeverbindung auf einfache und kostengünstige Weise Bauteilverbünde herstellen, die auch hohen Belastungen in der Praxis standhalten.

Ein Bauteilverbund, bei dem in erfindungsgemäßer Weise eine dauerhaft sichere Klebeverbindung gesichert ist, ohne dass dazu ein Haftvermittler auf eine der zu verklebenden Oberflächen aufgetragen werden muss, weist dementsprechend die in Anspruch 12 genannten Merkmale auf.

Vorteilhafte Ausgestaltungen der Erfindung sind in den abhängigen Ansprüchen angegeben und werden nachfolgend wie der allgemeine Erfindungsgedanke im Einzelnen erläutert.

Erfindungsgemäß wird also eine Oberfläche eines aus einem Metallwerkstoff gefertigten Bauteils, das an der zu aktivierenden Oberfläche eine Oxid- oder Hydroxidschicht trägt, für eine Verklebung mit einem Verbindungspartner aktiviert, indem mittels eines gepulsten Laserstrahls Einsenkungen in die Oberfläche eingebracht werden, um im Bereich der Einsenkungen die zuvor auf der Oberfläche vorhandene Oxid- oder Hydroxidschicht zu entfernen.

Dabei wird der Laserstrahl erfindungsgemäß mit einer Pulsdauer von mehr als 0 ns bis 300 ns auf die Oberfläche gerichtet, wobei seine gemessene Nennenergiedichte mehr als 5,75 J/cm² beträgt. Bei Einhaltung dieser Parameter wird im Bereich des Grundes der jeweils durch den Laserstrahl in die Oberfläche eingebrannten Einsenkung eine 30 - 300 nm dicke Oxidschicht erzeugt.

In der Praxis lässt sich dies insbesondere dann betriebssicher erreichen, wenn die Pulsdauer mindestens 0,5 ns, insbesondere mindestens 5 ns oder mindestens 10 ns beträgt, wobei kürzere Pulsdauern bei hohen Nennenergiedichten und längere Pulsdauern bei Nennenergiedichten zur Anwendung kommen können, die im Bereich der erfindungsgemäß vorgegebenen Mindestnennenergiedichte liegen. Bei heute handelsüblichen Lasern liegen die für die erfindungsgemäße Vorgehensweise typischen Pulsdauern im Bereich von 30 - 300 ns.

Als "Pulsdauer" wird hier die Zeitdauer bezeichnet, über die bei einem Puls die Leistung des Laserstrahls größer ist als die Hälfte von dessen maximaler Leistung.

Überraschend hat sich gezeigt, dass die als Klebfläche vorgesehene Oberfläche des jeweiligen Metallbauteils im Bereich der mittels des Laserstrahls in erfindungsgemäßer Weise in sie eingeformten Einsenkung eine Beschaffenheit aufweist, die nicht nur eine optimale Benetzung durch den jeweiligen Klebstoff ermöglicht, sondern auch eine dauerhaft feste Haftung des Klebstoffs am Grund der Einsenkung sichergestellt. Voraussetzung dazu ist, dass durch den jeweiligen Laserstrahlschuss zunächst die auf der Oberfläche vorhandene natürlich entstandene oder gezielt erzeugte Oxid- oder Hydroxidschicht entfernt und anschließend am Grund der Einsenkung eine Oxidschicht definierter Dicke gebildet wird.

Dies wird durch Einhaltung einerseits einer ausreichend langen, nach Maßgabe der Erfindung dauernden Pulsdauer, über die der Laserstrahl mit mindestens 50 % seiner maximalen Energie auf die jeweils zu aktivierende Oberfläche trifft, und andererseits dadurch erzielt, dass der Laserstrahl mit einer gemessenen Nennenergiedichte von mindestens 5,75 J/cm², insbesondere 9 - 35 J/cm², auf die betreffende Oberfläche trifft, wobei für die Praxis Nennenergiedichten von mindestens 13 J/cm² typisch sind.

Bei Laserstrahlen mit rechteckigem Querschnitt oder so genannter "Top-Hat-Verteilung" liefern Nennenergiedichten von mindestens 17 J/cm² betriebssicher gute Arbeitsergebnisse. Laserstrahlen mit gaußähnlicher Intensitätsverteilung und dementsprechend auf kleine Flächenausschnitte konzentrierter Ausbringung der Laserenergie bringen dagegen schon bei deutlich geringeren Nennenergiedichten den erfindungsgemäßen Anforderungen genügende Einsenkungen, die sich dann jedoch jeweils über entsprechend kleinere Flächen erstrecken.

"Nennenergiedichte" bezeichnet hier die gemittelte Energiedichte in einem bestimmten Abschnitt des jeweiligen Laserstrahlquerschnitts, wobei bei einem Laserstrahl mit gaußähnlicher Intensitätsverteilung die erfindungsgemäß vorgegebene "Nennenergiedichte" in einem Abschnitt vorhanden sein muss, in dem 86,5 % der Leistung des Laserstrahls vorliegen, wogegen bei einem Laserstrahl mit Top-Hat-ähnlicher Intensitätsverteilung die erfindungsgemäß geforderte "Nennenergiedichte" in dem Abschnitt des Laserstrahlquerschnitts gegeben sein muss, in dem 95 % der Leistung des Laserstrahls vorhanden sind.

Der entscheidende Erfolg der Erfindung besteht darin, dass durch die erfindungsgemäße Vorgehensweise die jeweilige Oberfläche des zu verklebenden Bauteils so konditioniert wird, dass ohne zusätzlichen Bedarf an einer chemischen Vorbehandlung, wie einer Konversionsbeschichtung oder einem Beizen, sowie bei minimiertem Bedarf an Verbrauchsmaterialen, wie einem besonderen Haftvermittler, eine dauerhaft sichere Verklebung ermöglicht wird. Die auf diesem Wege erzielten Kostenersparnisse sind beträchtlich.

Als besonders vorteilhaft erweist sich die Erfindung, wenn eines der zu verklebenden Bauteile aus einem Leichtmetallwerkstoff, insbesondere aus Aluminium oder einer Aluminiumlegierung, besteht. Bei aus Al oder einem Al-Werkstoff bestehenden Bauteilen hat sich die nachhaltige Wirkung von in erfindungsgemäßer Weise vorbereiteten und ausgeführten Klebeverbindungen in umfangreichen Tests bewährt. Dies gilt insbesondere dann, wenn das andere Bauteil, mit dem das in erfindungsgemäßer Weise behandelte Bauteil verklebt werden soll, nicht aus Metall, sondern beispielsweise aus einem Holzwerkstoff oder desgleichen besteht. Diese Bedingungen sind beispielsweise dann gegeben, wenn in erfindungsgemäßer Weise ein Bodenelement für ein Nutzfahrzeug dadurch gefertigt werden soll, dass eine Decklage, die aus Al-Werkstoff gefertigt ist und an deren Oberseite eine Ladefläche zum Verstauen von zu transportierendem Gut vorhanden ist, mit einer Traglage, die aus Holzwerkstoff besteht, verklebt wird. Ebenso kann die Erfindung zum Einsatz kommen, wenn andere aus Aluminiumwerkstoff gefertigte Bauteile, wie Profile, Einsätze, Wandteile oder desgleichen, im Nutzfahrzeugbau beispielsweise mit anderen aus Al oder seinen Legierungen bestehenden Bauteilen oder mit Bauteilen verklebt werden sollen, die aus Holz, Kunststoff oder einem anderen metallischen oder nichtmetallischen Material bestehen.

Die Querschnittsform der in die jeweilige Oberfläche erfindungsgemäß eingebrachten Einsenkungen hängt grundsätzlich von der Querschnittsform des zu ihrer Erzeugung verwendeten Laserstrahls ab. In der Praxis werden heute Laserstrahlen mit quadratischem, kreisrundem oder elliptischem Querschnitt eingesetzt.

Dabei können, wie erwähnt, Laserstrahlen zum Einsatz kommen, bei denen die Intensitätsverteilung der Leistung über die jeweilige Querschnittsfläche durch eine gaußähnliche Verteilung beschrieben werden kann. Insbesondere im Fall, dass mit dem erfindungsgemäßen Verfahren unebene Oberflächen bearbeitet werden sollen, besteht der Vorteil der Verwendung von Laserstrahlen mit einer gaußförmigen Intensitätsverteilung darin, dass der erfindungsgemäße Prozess bei Fokuslagenschwankungen nicht spontan abreißt. Vielmehr kann bei einem Laserstrahl mit gaußähnlicher Intensitätsverteilung der Strahl ausgerichtet werden, dass die Spitze des gaußähnlichen Intensitätsberges auch bei Strahlabschwächung oder Fokuslagenschwankungen immer noch über dem Schwellbereich liegt, bei dem in der jeweils bestrahlten Oberfläche eine den erfindungsgemäßen Vorgaben entsprechenden Einsenkung entsteht, und zwar selbst dann, wenn die Fläche des vom Laserstrahl jeweils getroffenen Bearbeitungsfleckes nicht voll ausgeprägt ist.

Beispielsweise für weniger lagekritische Anwendungen oder in anderen Fällen, in denen beispielsweise aufgrund anlagen- oder verfahrenstechnischer Vorkehrungen die Gefahr eines Abrisses des Laserstrahls nur von untergeordneter Bedeutung ist, lassen sich alternativ auch Laser verwenden, deren Laserstrahl sich durch eine gleichmäßige Leistungsverteilung auszeichnet (so genannte "Top-Hat-Verteilung").

Bei Lasern mit einer Top-Hat-Verteilung der Leistungsdichteverteilung beträgt die Nennenergiedichte optimalerweise mindestens 17 J/cm², insbesondere mindestens 19 J/cm². Gute Bearbeitungsergebnisse stellen sich in diesem Fall besonders betriebssicher ein, wenn die Nennenergiedichte 19 - 21 J/cm² beträgt.

Die Dichte, mit der die erfindungsgemäß ausgebildeten Einsenkungen in die jeweilige Oberfläche des metallischen Bauteils verteilt eingebracht werden, bestimmt die Größe der für die sichere Verklebung zur Verfügung gestellten aktivierten Gesamtfläche. Hieraus ergibt sich bei großflächig miteinander zu verklebenden Bauteilen die Möglichkeit, in bestimmten Zonen, in denen es im praktischen Einsatz des nach der Verklebung erhaltenen Bauteilverbunds zu erhöhten Belastungen kommt, viele Einsenkungen mit geringen Abständen oder überlappend in die Oberfläche einzubringen, während in weniger belasteten Bereichen die Abstände zwischen den Einsenkungen größer sind.

Wenn jedoch eine gleichmäßige Belastbarkeit der Verklebung gewährleistet werden soll, ist es auch unter dem Aspekt der einfachen verfahrenstechnischen Umsetzung zweckmäßig, wenn die Einsenkungen in gleichmäßiger Verteilung in die Oberfläche eingebracht werden.

Eine besonders effiziente, vollflächig wirksame erfindungsgemäße Oberflächenaktivierung ergibt sich dann, wenn die Einsenkungen aneinander angrenzend oder einander überlappend ausgebildet werden. "Überlappend" heißt dabei, dass sich benachbarte Einsenkungen in einem Randbereich überdecken. Verfahrensmäßig effektiv umsetzbar ist hier eine Überlappung von bis zu 35 % der Flächen benachbarter Einsenkungen, wobei in praktischen Versuchen Oberflächen, bei denen sich die Einsenkungen um 5 - 30 % ihrer Fläche überlappen, zu guten Klebeergebnissen geführt haben.

Die Einsenkungen können kraterartig mit Randbereichen ausgebildet sein, die die Einsenkungen jeweils vollständig umgrenzen. Genauso können die Einsenkungen auch ineinander übergehen, so dass ihre Grundflächen sich gemeinsam über eine größere zusammenhängende Fläche erstrecken, an der die erfindungsgemäß geforderte Oxidschicht in ausreichender Dicke vorhanden ist. Die Einsenkungen können auch so dicht gesetzt sein, dass eine nahezu homogen raue Oberfläche gebildet ist, bei der sich die einzelnen Punkte nur noch durch eine leichte Schuppung der nach der Laserbehandlung erhaltenen Oberfläche abzeichnen.

Sofern Laserstrahlen mit gaußähnlicher Intensitätsverteilung zum Einsatz kommen, so kann der die Größe der Grundfläche der Einsenkungen bestimmende, an der jeweils zu aktivierenden Oberfläche gemessene Öffnungsdurchmesser der Einsenkungen im Mittel 40 - 180 µm betragen. Derart bemessene Einsenkungen lassen sich mit konventionellen Laserquellen problemlos herstellen. Öffnungsdurchmesser von 45 - 120 µm, insbesondere 60 - 90 µm, haben sich bei praktischen Versuchen als besonders zweckentsprechend herausgestellt. Bei Laserstrahlen mit Top-Hat-Verteilung kann dagegen aufgrund der größeren Strahldurchmesser der Öffnungsdurchmesser 0,4 - 1,2 mm, insbesondere 0,5 - 0,8 mm, betragen.

Die Tiefe der Einsenkungen sollte so eingestellt werden, dass einerseits die oberflächennahe Oxid- oder Hydroxidschicht auf der jeweils zu aktivierenden Oberfläche sicher abgetragen wird und andererseits eine wirtschaftliche Betriebsweise gesichert ist. Zu diesem Zweck kann die Tiefe der Einsenkungen auf 3 - 30 µm, insbesondere 5 - 20 µm oder 5 - 15 µm, eingestellt werden.

Für eine wirtschaftliche und betriebssichere Umsetzung des erfindungsgemäßen Verfahrens ist es zweckmäßig, zum Einbringen der Einsenkungen in die zu aktivierende Oberfläche Laserstrahlsysteme einzusetzen, die einen handelsüblichen so genannten "Scanner" umfassen. Dieser bringt die einzelnen Laserstrahlpulse zeilenweise entsprechend der vorgesehenen Verteilung der Einsenkungen aus, wobei in der Regel die Ablenkung des Laserstrahls über die Bewegung eines in dem Scanner vorgesehenen Ablenkspiegels einstellbar ist. Eine laserbearbeitete Fläche ergibt sich dann dadurch, dass mittels des Scanners mehrere Zeilen von Einsenkungen benachbart zueinander in die zu behandelnde Oberfläche eingebracht werden.

Ein Problem bei der zeilenweisen Ausbringung besteht darin, dass die Länge der vom durch den Scanner abgelenkten Laserstrahl überstrichenen Zeile begrenzt ist, da mit zunehmender Ablenkung die Intensität des Laserstrahls abnimmt. Daher muss der Spiegel des Scanners am Ende der jeweils überstrichenen Zeile abbremsen und seine Bewegungsrichtung umkehren mit der Folge, dass die Anzahl der pro Fläche ausgebrachten Einsenkungen abnimmt.

Eine Möglichkeit, dieses Problem bei gleichzeitig optimierter Nutzung der bei konventionellen Laserstrahlquellen vorhandenen Optionen zu vermeiden, besteht gemäß einer weiteren Variante der Erfindung darin, dass das Bauteil mit seiner zu aktivierenden Oberfläche in einer linear ausgerichteten Förderrichtung relativ zur Laserstrahlquelle bewegt wird und der Laserstrahl die Einsenkungen in Zeilen in die Oberfläche einbringt, die in Förderrichtung des Bauteils ausgerichtet sind. Auf diese Weise können auch quer zur Förderrichtung schmale Bereiche mit einer gegenüber ihrer Breite viel größeren Zeilenlänge bearbeitet werden. Die mit der Annäherung an den jeweiligen Umkehrpunkt unvermeidbare Abnahme der Bewegungsgeschwindigkeit des Lasers spielt dabei nur eine untergeordnete Rolle.

Die Ausrichtung der jeweils vom Laserstrahl überstrichenen Zeile kann parallel zur Förderrichtung des Bauteils oder schräg dazu ausgerichtet sein. Auch durch eine schräge Ausrichtung lässt sich die in Förderrichtung des jeweiligen Substrats gemessene Zeilenlänge effektiv vergrößern. Die Breite der jeweils zu aktivierenden Oberfläche lässt sich dann dadurch abdecken, dass mehrere jeweils eine parallel zu den anderen Zeilen ausgerichtete Zeile beschreibende Laserquellen nebeneinander über die Breite der Oberfläche verteilt angeordnet sind.

Der mit der Ausrichtung der von den Laserstrahlen überstrichenen Zeile in Richtung der Relativbewegung zwischen dem Bauteil und der Laserstrahlquelle verbundene Effekt wirkt sich umso deutlicher aus, je länger die jeweilige Zeile ist. Bei heute verfügbaren Laseranlagen haben sich unter diesem Aspekt Zeilenlängen von mindestens 30 mm, insbesondere mindestens 40 mm, bewährt, wobei der Länge der jeweiligen Zeile nur durch den mechanisch-optischen Aufbau des jeweiligen Lasersystems Grenzen gesetzt sind.

Das erfindungsgemäße Verfahren zum Herstellen einer Klebverbindung zwischen einander zugeordneten Oberflächen von zwei Bauteilen, von denen mindestens eines aus einem Metallwerkstoff besteht und an seiner dem anderen Bauteil zugeordneten Oberfläche eine Oxid- oder Hydroxidschicht trägt, sieht entsprechend der voranstehenden Erläuterungen vor, dass die Oberfläche des aus dem Metallwerkstoff bestehenden Bauteils in der erfindungsgemäßen Weise aktiviert wird, dass auf eine der Oberflächen ein Klebstoff aufgetragen wird und dass die Bauteile gefügt werden, so dass die aktivierte Oberfläche des einen Bauteils unmittelbar, d. h. ohne Zwischenschaltung eines Haftvermittlers oder sonstiger Hilfsmittel, mit dem Klebstoff in Kontakt ist.

Besonders wirtschaftlich lassen sich auf diese Weise Bauteilverbünde herstellen, bei denen die einzelnen Bauteile großflächig miteinander verklebt sind. Ein Beispiel für eine solche Anwendung ist ein als Bauteilverbund sandwichartig aufgebautes Bodenelement für ein Nutzfahrzeug, bei dem das eine Bauteil eine Traglage und das andere Bauteil eine aus Aluminiumwerkstoff bestehende Decklage ist, an deren nach dem Fügen freien Oberseite eine Ladefläche für ein von dem Nutzfahrzeug zu transportierendes Gut ausgebildet ist.

Ein erfindungsgemäßer Bauteilverbund, der aus mindestens zwei Bauteilen gebildet ist, von denen mindestens eines aus einem Metallwerkstoff besteht, wobei die Bauteile an einander zugeordneten Oberflächen miteinander verklebt sind, ist ebenfalls in Entsprechung zu den voranstehenden Erläuterungen dadurch gekennzeichnet, dass in die dem jeweils anderen Bauteil zugeordnete Oberfläche des aus Metallwerkstoff bestehenden Bauteils Einsenkungen eingeformt sind, an deren Grund eine 3 - 300 nm dicke Oxidschicht ausgebildet ist, wobei die mit den Einsenkungen versehene Oberfläche direkt mit dem Kleber verbunden ist. Entscheidendes Kennzeichen eines erfindungsgemäßen Bauteilverbunds ist somit auch hier, dass der Klebstoff unmittelbar, d. h. ohne Zwischenschaltung von irgendwelchen Hilfsmitteln, an der erfindungsgemäß durch die eingebrachten Einsenkungen oberflächenaktivierten Oberfläche anliegt und dort dauerhaft anhaftet.

Erforderlichenfalls kann jedoch die erfindungsgemäß aktivierte Oberfläche mit einer Schutzschicht versehen sein, die beispielsweise bei längerer Lagerung ein erneutes unkontrolliertes Oxidieren der zuvor behandelten Oberfläche in Folge des Kontakts mit dem Sauerstoff der Umgebungsatmosphäre verhindert. Bei der betreffenden Beschichtung kann es sich um einen sogenannten Schutzprimer oder desgleichen handeln, wie er in der Praxis für diesen Zweck bereits verwendet wird. Entscheidend ist hier, dass die erfindungsgemäß behandelte Oberfläche ohne großen Aufwand so geschützt wird, dass keine erneute Oberflächenbehandlung erforderlich wird, um die ordnungsgemäße Anhaftung des jeweiligen Klebstoffs ohne die Zwischenschaltung von Haftvermittlern und ohne weitere Oberflächenbehandlung sicherzustellen.

Die für die geometrische Ausprägung der Einsenkungen und ihre Verteilung auf der jeweils aktivierten Oberfläche oben bereits im Zusammenhang mit dem erfindungsgemäßen Verfahren vorgestellten Varianten und gegebenen Erläuterungen gelten selbstverständlich in gleicher Weise für einen erfindungsgemäßen Bauteilverbund und die bei ihm an der der Verklebung zugeordneten, aktivierten Oberfläche vorgesehenen Einsenkungen in gleicher Weise. Nachfolgend wird die Erfindung anhand von Ausführungsbeispielen näher erläutert. Dazu wird auf eine Zeichnung Bezug genommen, deren Figuren jeweils schematisch und nicht maßstäblich Folgendes zeigen:
- Fig. 1: eine Vorrichtung zum Aktivieren eines streifenförmigen Abschnitts einer Oberfläche, die an der Unterseite einer aus einem Aluminiumwerkstoff bestehenden Decklage für einen Nutzfahrzeug vorhanden ist, in seitlicher Ansicht;
- Fig. 2 - 6: Ausschnitte von in sechs verschiedenen Varianten in die aktivierte Oberfläche der Decklage eingebrachten Einsenkungen;

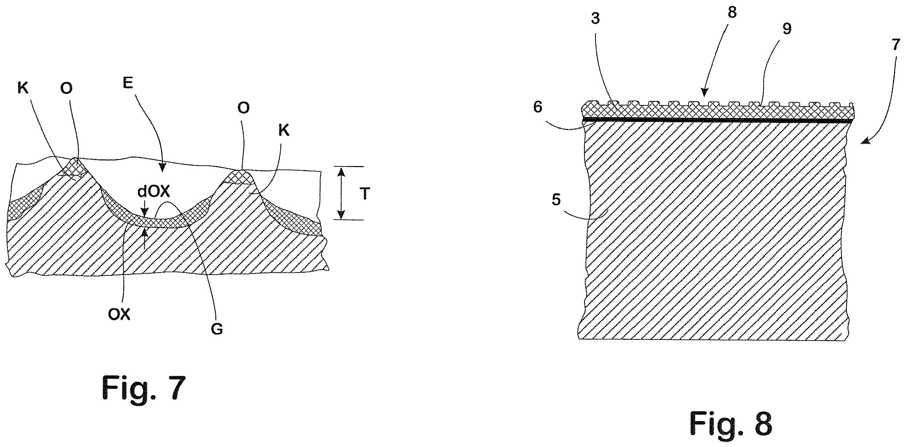

- Fig. 7: einen Ausschnitt der aktivierten Oberfläche der Decklage in einem Längsschnitt;
- Fig. 8: einen Ausschnitt einer als Bauteilverbund ausgebildeten Bodenplatte für ein Nutzfahrzeug im Längsschnitt ;

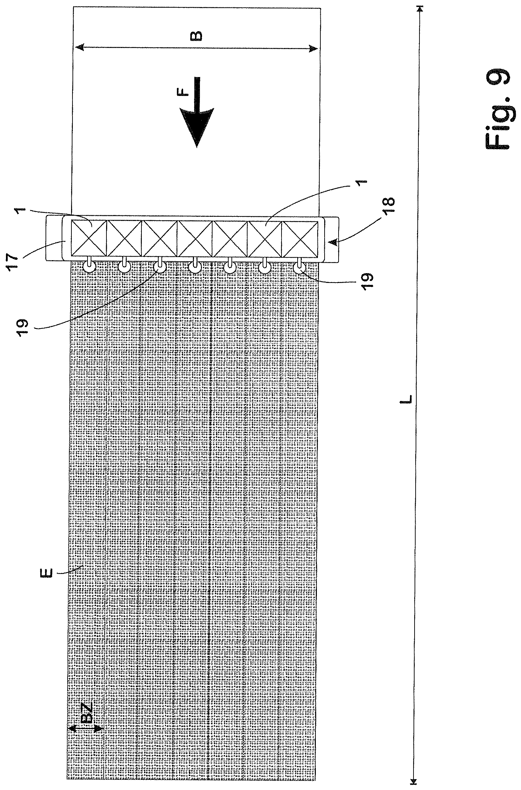

- Fig. 9: eine Anlage zum Aktivieren der Oberfläche der Decklage über deren Gesamtbreite in Draufsicht von oben:
- Fig. 10: ein Diagramm, das die Strahlbreite eines Laserstrahls mit gaußähnlicher Intensitätsverteilung zeigt.

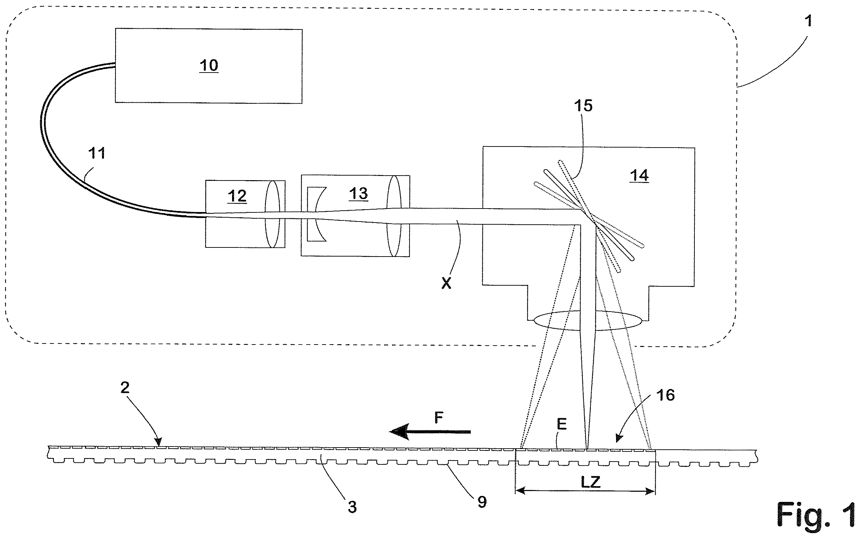

Die in Fig. 1 gezeigte Vorrichtung 1 dient zum Aktivieren eines streifenförmigen Abschnitts einer ebenen Oberfläche 2, die an der Unterseite einer aus einem Aluminiumwerkstoff gefertigten Decklage 3 ausgebildet ist.

Die Decklage 3 ist dazu vorgesehen, direkt auf einer aus Holzwerkstoff gebildeten Trägerplatte 5 aufgeklebt zu werden. Die Verklebung erfolgt dabei ausschließlich durch einen auf die aktivierte Oberfläche 2 der Decklage 3 unmittelbar, d.h. ohne Zwischenschaltung irgendwelcher zusätzlicher Haftvermittler, aufgetragenen Klebstoffschicht 6, über die die Decklage 3 nach dem Aushärten der Klebstoffschicht 6 stoffschlüssig an die Trägerplatte 5 angebunden ist.

Der aus der Trägerplatte 5 und der Decklage 3 so gebildete Bauteilverbund stellt eine Bodenplatte 7 dar, die im Nutzfahrzeugbau eingesetzt wird. Die dann freie Oberseite der Decklage 3 bildet eine Ladefläche 8, auf der das jeweils vom Nutzfahrzeug zu transportierende Gut abgestellt werden kann. Um dabei Rutschsicherheit zu gewährleisten, ist die Decklage 3 an ihrer freien Oberseite mit einem Rillenprofil 9 versehen.

Die konventionell aufgebaute Laserbestrahlungsvorrichtung 1 umfasst eine Laserquelle 10, die einen gepulsten Laserstrahl X erzeugt. Der Laserstrahl X wird über einen Lichtleiter 11 an einen Auskoppler 12 geliefert, von dem er durch einen Aufweiter 13 zu einem Scanner 14 geleitet wird. Der den Laserstrahl X ausbringende und insoweit als Laserstrahlquelle anzusehende Scanner 14 umfasst einen in mindestens zwei Achsrichtungen schwenkbaren Spiegel 15, der laufend bewegt wird und dadurch den Laserstrahl X in an sich bekannter Weise so umlenkt, dass er eine in Längsrichtung der Decklage 3 gerichtete Zeile 16 mit einer bestimmten Länge LZ und einer bestimmten Breite BZ überstreicht. Die von dem Laserstrahl X jeweils überstrichene Breite BZ entspricht einem Bruchteil der Gesamtbreite B und die Zeilenlänge LZ einem Bruchteil der Gesamtlänge L der Decklage 3.

Um die Decklage 3 über ihre Gesamtlänge L und Gesamtbreite B aktivieren zu können, sind in einer stationär angeordneten Brücke 17 einer Laserbehandlungsanlage 18 mehrere gleichartige Vorrichtungen 1 über die Gesamtbreite B der Decklage 3 so verteilt angeordnet, dass die von den einzelnen Vorrichtungen 1 überstrichenen Zeilen 16 seitlich aneinander grenzen und dementsprechend die Gesamtbreite B von den von den Vorrichtungen 1 ausgebrachten Laserstrahlen X gemeinsam abgedeckt wird. Gleichzeitig wird die Decklage 3 in Förderrichtung F während der Laserbehandlung in einer linearen Vorschubbewegung relativ zu der Laserbehandlungsanlage 18 bewegt.

Die von den Vorrichtungen 1 ausgebrachten Laserstrahlen X schießen pulsweise aufeinander folgend Einsenkungen E in die Oberfläche 2 der Decklage 2. Dabei sind die jeweils von den von den Vorrichtungen 1 ausgebrachten Laserstrahlen X überstrichenen Zeilen 16 in Förderrichtung F der Decklage 3 ausgerichtet, so dass die am Ende und am Anfang der jeweiligen Zeile 16 unvermeidbare Umkehrbewegung der Spiegel 15 keinen Einfluss auf die Qualität der jeweils erzeugten Einsenkungen E hat und die effektiv erzielbare Flächenrate, d.h. die pro Zeiteinheit bearbeitete Fläche, nur minimal beeinträchtigt wird. Auf diese Weise kann eine beliebige Anzahl von Vorrichtungen 1 in der Laserbehandlungsanlage 18 angeordnet werden, um die Decklage 3 in einem Durchgang über ihre gesamte Breite B bearbeiten zu können.

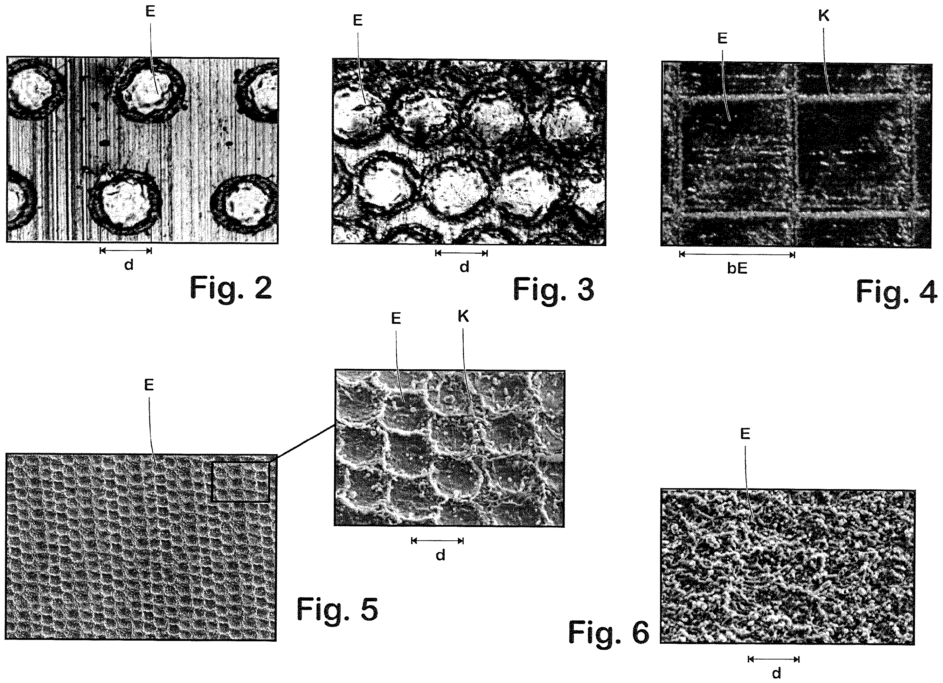

Abhängig vom zeitlichen Abstand der einzelnen Laserpulse und von der Geschwindigkeit der Vorschubbewegung werden die Einsenkungen E beabstandet zueinander (Fig. 2), in Förderrichtung F in Linien aneinander grenzend, jedoch in Breitenrichtung beabstandet (Fig. 3), in jeder Richtung aneinander grenzend und nur noch durch schmale Kraterränder K voneinander getrennt (Fig. 3, 4) oder so stark überlappend ausgebracht, dass nur noch ein unregelmäßiges Schuppenmuster erkennbar ist (Fig. 6).

Dabei können abhängig vom jeweils angestrebten, auf die jeweils betrachtete Fläche bezogenen Grad der Aktivierung die Einsenkungen E regelmäßig oder nach Art einer zufälligen Verteilung in die Oberfläche 2 eingebrannt werden. Auch ist es möglich, den Überlappungsgrad über die Länge oder Breite der Decklage 3 zu variieren, um größere zusammenhängende Einsenkungszonen zu schaffen, bei denen sich die durch den Laserbeschuss erzeugte Oxidschicht OX großflächiger erstreckt (maximale Aktivierung) als in anderen Bereichen, in denen nur punktweise vereinzelte Einsenkungen E in größeren Abständen vorliegen (minimale Aktivierung). In der Praxis haben sich für eine großflächig zusammenhängende, über die Gesamtbreite B und Gesamtlänge L der Decklage 3 erstreckende Aktivierung der Oberfläche 2 Überlappungsgrade von bis zu 35 % bewährt.

Entscheidend ist, dass bei der Erzeugung der Einsenkungen E die auf der zu aktivierenden Oberfläche 2 in Folge natürlicher oder gezielt ausgelöster Oxidationsprozesse unvermeidbar vorhandene Oxidschicht O von den Laserstrahlen X durchstoßen und am Grund G der Einsenkungen E eine neue Oxidschicht OX gebildet wird, deren Dicke dOX 30 - 300 nm beträgt.

Die Energiedichte, mit der der Laserstrahl X auf die Oberfläche 2 trifft, wird dabei so eingestellt, dass Einsenkungen E mit einer Tiefe T von 3 - 20 µm entstehen. Die Hierzu eingestellten Nennenergiedichten liegen im Bereich von 13 - 35 J/cm².

Die Öffnungsform der Einsenkungen E ist abhängig von der Form und der Energiedichteverteilung, mit der Laserstrahl X von den Vorrichtungen 1 ausgebracht wird.

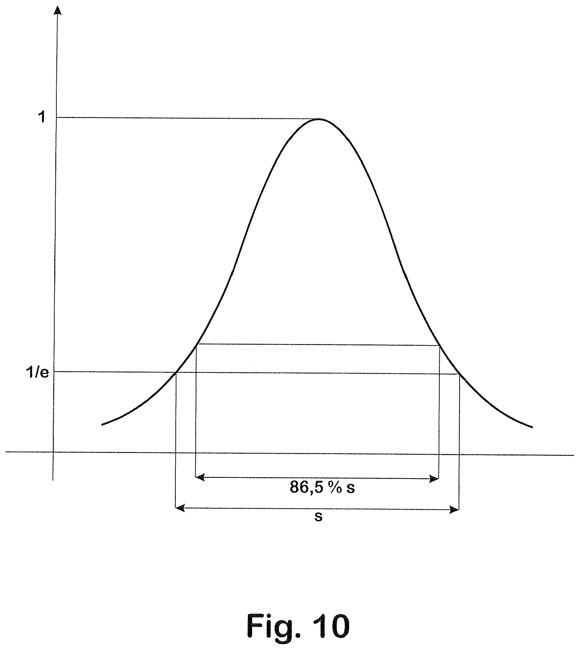

Bei den mehr als 13 m langen Decklagen 3, bei denen es naturgemäß in Folge unvermeidbarer Verformungen zu deutlichen Abweichungen der an sich planen Oberfläche 2 von der optimalen Planlage kommt, hat es sich bewährt, die Einsenkungen E mittels eines Laserstrahls X einzubringen, der eine gaußähnliche Intensitätsverteilung besitzt, wie in Fig. 10 dargestellt. Da ein derartiger Laserstrahl X eine ausgeprägte Spitze aufweist, in der sich die Laserstrahlung konzentriert, behält der Laserstrahl X im Rahmen der zu erwartenden Planheitsabweichungen der Oberfläche 2 und der damit verbundenen Veränderungen des Strahlquerschnitts auf der Oberfläche 2 auch bei größeren Unebenheiten einen für das Einbrennen der Einsenkungen E stets ausreichenden Energiedichte bereit. Dies gilt auch dann wenn die Nennenergiedichte unter das erforderliche Maß fällt, das zur Bearbeitung der gesamten Fläche innerhalb eines Querschnittes wird, der 86,5 % der Gesamtleistung enthält. Insbesondere ein dem Gaußschen-Strahl nahekommender Laserstrahl, d.h. ein Strahl mit hoher Strahlqualität, eignet sich gut für diese Anwendung, da ein solcher Strahl (im Gegensatz zu Multimode-Strahlen) beim Durchgang durch den Fokuspunkt stets eine gleiche gaußähnliche Energiedichteverteilung aufweist.

Spielt das Problem der Planheitsabweichungen keine besondere Rolle oder sind zusätzliche Maßnahmen, wie Saugtische oder desgleichen getroffen worden, um eine optimal plane Ausrichtung der zu aktivierenden Oberfläche 2 zu gewährleisten, so können auch Laser mit einer so genannten Top-Hat-Verteilung eingesetzt werden. Diese zeichnen sich dadurch aus, dass die Leistung gleichmäßig über den beispielsweise quadratischen Querschnitt des Laserstrahls verteilt vorliegt. Derartige Laserstrahlen können mit einem Schuss großflächige Einsenkungen E von gleichmäßig quadratischer Form und regelmäßiger Verteilung erzeugen (Fig. 4).

Um die Qualität der mittels der Vorrichtungen 1 der Anlage 18 automatisch kontrollieren zu können, ist jeder Vorrichtung 1 eine konventionell ausgebildete Glanzgradmessungseinrichtung 19 zugeordnet, die das Reflektionsvermögen der mit den Einsenkungen E versehenen Oberfläche 2 erfasst. Liegt das erfasste Reflektionsvermögen außerhalb eines vorgegebenen Bereichs, so gibt die jeweilige Einrichtung 19 ein Warnsignal ab, auf das hin die jeweils zugeordnete Vorrichtung 1 nachjustiert wird.

Die mittels eines Laserstrahls X mit gaußähnlicher Intensitätsverteilung erzeugten Einsenkungen E weisen einen Öffnungsdurchmesser d auf, der in der Praxis typischerweise im Bereich von 50 - 100 µm liegt. Laserstrahlen mit Top-Hat-Verteilung können dagegen Einsenkungen E mit einer Breite bE erzeugen, die typischerweise dem Ein- bis Achtfachen des Durchmessers d entsprechen.

Proben der Decklage 3 sind an ihrer Oberfläche 2 mit Einsenkungen E mittels eines mit einer Pulsdauer von 120 ms gepulsten Lasers mit gaußähnlicher Intensitätsverteilung versehen worden, dessen Strahlbreite s bei kreisrundem Strahlquerschnitt 73 µm betrug. Die Einsenkungen E sind dabei mit einem Überlappungsgrad von 20 % im Verhältnis zu ihren Mittenabständen in die Oberfläche 2 der Decklagenproben eingebrannt worden (Fig. 4). Die dabei eingestellte Nennenergiedichte des Laserstrahls lagen bei den einzelnen Versuchen bei 5,8 J/cm², 6 J/cm², 10 J/cm², 15 J/cm², 18 J/cm, 19 J/cm², 21 J/cm² sowie 25 J/cm².

Die so oberflächenaktivierten Decklagenproben sind anschließend mit einem handelsüblichen Zwei-Komponenten-Polyurethan-Kleber mit einem aus Holz bestehenden plattenförmigen Träger verklebt worden. Der Kleber ist direkt auf die mit den Einsenkungen E versehene Oberfläche 2 aufgetragen worden. Bei den so verklebten Proben überstand die Decklage 3 trotz des Verzichts auf jeden Haftvermittler und alle sonstigen Hilfsmittel den in Anlehnung an EN 14444 durchgeführten Keilspalttest. Für diesen Test sind die Proben für 30 Tage in einer Wärmekammer bei einer Temperatur von 80 °C und einer relativen Luftfeuchtigkeit von 90 % gelagert worden. Gemessen wurde dann das Risslängenwachstum nach Eintreiben eines Keils in den zwischen der Decklage und dem Träger vorhandenen Klebespalt. Die Versuche zeigten, dass bei den erfindungsgemäßen Proben die durch das Eintreiben des Keils erzwungen Risslängen durchweg kürzer waren als bei konventionell verklebten Proben, bei denen die Anbindung des Klebers an die Decklage mittels eines nach einer Beizbehandlung mit Flusssäure auf die Klebefläche der Decklage aufgetragenen Haftvermittlers erfolgte.

### BEZUGSZEICHEN

- 1: Vorrichtung zum Aktivieren der Oberfläche eines Bauteils
- 2: Oberfläche der Decklage 2
- 3: aus Aluminiumwerkstoff hergestellte Decklage
- 5: Trägerplatte
- 6: Klebstoffschicht
- 7: Bodenplatte
- 8: Ladefläche
- 9: Rillenprofil
- 10: Laserquelle
- 11: Lichtleiter
- 12: Auskoppler
- 13: Aufweiter
- 14: Scanner
- 15: Spiegel
- 16: von einem Laserstrahl X jeweils überstrichene Zeile
- 17: Brücke der Laserbehandlungsanlage 18
- 18: Laserbehandlungsanlage
- 19: Glanzgradmesseinrichtung

- B: Gesamtbreite der Decklage 3
- bE: Breite der Einsenkungen E (Fig. 4)
- BZ: Breite der Zeile 16
- d: Öffnungsdurchmesser der Einsenkungen E (Fig. 2,3,5,6)
- dOX: Dicke der Oxidschicht OX
- E: Einsenkungen
- F: Förderrichtung
- G: Grund der Einsenkungen E
- K: Kraterränder
- L: Gesamtlänge der Decklage 3
- LZ: Länge der Zeile 16
- O: Oxidschicht
- OX: neue Oxidschicht
- S: Laserstrahlbreite
- T: Tiefe der Einsenkungen E
- X: gepulste Laserstrahlen X

## Patentansprüche

1. Verfahren zum Aktivieren einer Oberfläche eines aus einem Metallwerkstoff gefertigten Bauteils, das an der zu aktivierenden Oberfläche (2) eine Oxid- oder Hydroxidschicht trägt, für eine Verklebung mit einem Verbindungspartner, bei dem mittels eines gepulsten Laserstrahls (X) Einsenkungen (E) in die Oberfläche (2) eingebracht werden, um im Bereich der Einsenkungen (E) die zuvor auf der Oberfläche (2) vorhandene Oxid- oder Hydroxidschicht (O) zu entfernen, **dadurch gekennzeichnet, dass** der Laserstrahl (X) mit einer Pulsdauer von >0 - 300 ns auf die Oberfläche (2) gerichtet wird und seine gemessene Nennenergiedichte dabei größer 5,75 J/cm² ist, um im Bereich des Grundes (G) der jeweils durch den Laserstrahl in die Oberfläche (2) eingebrannten Einsenkung (E) eine 30 - 300 nm dicke Oxidschicht (OX) zu erzeugen.

2. Verfahren nach Anspruch 1, **dadurch gekennzeichnet, dass** die Einsenkungen (E) in gleichmäßiger Verteilung in die Oberfläche (2) eingebracht werden.

3. Verfahren nach einem der voranstehenden Ansprüche, **dadurch gekennzeichnet, dass** die Einsenkungen (E) einander überlappend in die Oberfläche (2) eingebracht werden.

4. Verfahren nach Anspruch 3, **dadurch gekennzeichnet, dass** zueinander benachbarte Einsenkungen (E) bis zu 35 % ihrer Fläche überlappend in die Oberfläche (2) eingebracht werden.

5. Verfahren nach einem der voranstehenden Ansprüche, **dadurch gekennzeichnet, dass** der an der Oberfläche (2) gemessene Öffnungsdurchmesser (d) der Einsenkungen (E) im Mittel 40 - 180 µm beträgt.

6. Verfahren nach einem der voranstehenden Ansprüche, **dadurch gekennzeichnet, dass** die Tiefe (T) der Einsenkungen (E) 3 - 20 µm beträgt.

7. Verfahren nach einem der voranstehenden Ansprüche, **dadurch gekennzeichnet, dass** die Nennenergiedichte des Laserstrahls (X) 9 - 35 J/cm², insbesondere mindestens 17 J/cm², beträgt.

8. Verfahren nach einem der voranstehenden Ansprüche, **dadurch gekennzeichnet, dass** das Bauteil (3) mit seiner zu aktivierenden Oberfläche (2) in einer linear ausgerichteten Förderrichtung (F) relativ zur Laserstrahlquelle (1) bewegt wird, und d a s s der Laserstrahl (14) die Einsenkungen (E) in Zeilen in die Oberfläche (2) einbringt, die in Förderrichtung (F) ausgerichtet sind.

9. Verfahren nach einem der voranstehenden Ansprüche, **dadurch gekennzeichnet, dass** der Laserstrahl (X) eine gaußähnliche Energiedichteverteilung aufweist.

10. Verfahren zum Herstellen einer Klebverbindung zwischen einander zugeordneten Oberflächen (2) von zwei Bauteilen (3,5), von denen mindestens eines aus einem Metallwerkstoff besteht und an seiner dem anderen Bauteil (5) zugeordneten Oberfläche (2) eine Oxid- oder Hydroxidschicht trägt, **dadurch gekennzeichnet,**
- **dass** die Oberfläche (2) des aus dem Metallwerkstoff bestehenden Bauteils (3) in der in einem der Ansprüche 1 bis 9 angegebenen Weise aktiviert wird,
- **dass** optional auf die aktivierte Oberfläche eine Beschichtung aufgebracht wird,
- **dass** auf eine der Oberflächen (2) ein Klebstoff aufgetragen wird und
- **dass** die Bauteile (3,5) gefügt werden, so dass die aktivierte Oberfläche (2) des aus dem metallsichen Werkstoff bestehenden Bauteils (3) unmittelbar mit dem Klebstoff in Kontakt ist.

11. Verfahren nach Anspruch 10, **dadurch gekennzeichnet, dass** das eine Bauteil eine Traglage (5) und das andere Bauteil eine aus Aluminiumwerkstoff bestehende Decklage (3) für einen Boden eines Nutzfahrzeugs ist, an deren nach dem Fügen freien Oberseite eine Ladefläche (8) für ein von dem Nutzfahrzeug zu transportierendes Gut ausgebildet ist.

12. Bauteilverbund gebildet aus mindestens zwei Bauteilen (3,5), von denen mindestens eines aus einem Metallwerkstoff besteht, wobei die Bauteile (3,5) an einander zugeordneten Oberflächen (2) miteinander verklebt sind, **dadurch gekennzeichnet, dass** in die dem jeweils anderen Bauteil (5) zugeordnete Oberfläche (2) des aus Metallwerkstoff bestehenden Bauteils (3) Einsenkungen (E) eingeformt sind, an deren Grund (G) eine 3 - 300 nm dicke Oxidschicht (OX) ausgebildet ist, und **dass** die mit den Einsenkungen (E) versehene Oberfläche (2) direkt mit dem Kleber verbunden ist.

13. Bauteilverbund nach Anspruch 12, **dadurch gekennzeichnet, dass** die Einsenkungen (E) aneinandergrenzend oder einander überlappend angeordnet sind.

14. Bauteilverbund nach einem der Ansprüche 12 oder 13, **dadurch gekennzeichnet, dass** die Tiefe der Einsenkungen (E) 3 - 20 µm beträgt.

15. Bauteilverbund nach einem der Ansprüche 12 - 14, **dadurch gekennzeichnet, dass** der an der Oberfläche (2) gemessene Öffnungsdurchmesser (d) der Einsenkungen (E) im Mittel 40 - 180 µm beträgt.

## Claims

1. Method for activating a surface of a component made of a metal material, which has an oxide or hydroxide layer on the surface to be activated (2) for bonding to a link partner, in which by means of a pulsed laser beam (X) depressions (E) are introduced into the surface (2), in order for the oxide or hydroxide layer (0) previously existing on the surface (2) to be removed in the region of the depressions (E), **characterised in that** the laser beam (X) is directed at the surface (2) with a pulse duration of >0 - 300 ns and its measured nominal energy density is greater than 5.75 J/cm² in order to produce an oxide layer (OX) which is 30 - 300 nm thick in the region of the base (G) of the depression (E) burnt into the surface (2)by the laser beam.

2. Method according to Claim 1, **characterised in that** the depressions (E) are introduced into the surface (2) in a uniform distribution.

3. Method according to any one of the preceding claims, **characterised in that** the depressions (E) are introduced into the surface (2) overlapping each other.

4. Method according to Claim 3, **characterised in that** mutually adjacent depressions (E) are introduced into the surface (2) overlapping over up to 35% of their area.

5. Method according to any one of the preceding claims, **characterised in that** the opening diameter (d) of the depressions (E) measured on the surface (2) is on average 40-180 µm.

6. Method according to any one of the preceding claims, **characterised in that** the depth (T) of the depressions (E) is 3 - 20 µm.

7. Method according to any one of the preceding claims, **characterised in that** the nominal energy density of the laser beam (X) is 9 - 35 J/cm², in particular at least 17 J/cm².

8. Method according to any one of the preceding claims, **characterised in that** the component (3) having the surface to be activated (2) is moved in a linearly aligned conveying direction (F) relative to the laser beam source (1), and **in that** the laser beam (14) introduces the depressions (E) into the surface (2) in lines which are aligned in the conveying direction (F).

9. Method according to any one of the preceding claims, **characterised in that** the laser beam (X) has a Gaussian-like energy density distribution.

10. Method for producing an adhesive bond between mutually associated surfaces (2) of two components (3, 5), at least one of which comprises a metal material and has an oxide or hydroxide layer on its surface (2) associated with the other component (5), **characterised**
- **in that** the surface (2) of the component (3) comprising the metal material is activated in the manner specified in any one of Claims 1 to 9,
- **in that** optionally a coating is applied to the activated surface,
- **in that** an adhesive is applied to one of the surfaces (2), and
- **in that** the components (3, 5) are joined in such a way that the activated surface (2) of the component (3) comprising the metallic material is in direct contact with the adhesive.

11. Method according to Claim 10, **characterised in that** the one component is a backing layer (5) and the other component is a cover layer (3) for a floor of a commercial vehicle, the cover layer consisting of an aluminium material, and a loading surface (8) for goods to be transported by the commercial vehicle being formed on the upper side of the cover layer after joining.

12. Composite component formed from at least two components (3, 5), at least one of which comprises a metal material, wherein the components (3, 5) are bonded to one another on associated surfaces (2), **characterised in that** depressions (E) are formed into the surface (2) of the component (3) comprising metal material, said surface (2) being associated with the respective other component (5), and on the base (G) of these depressions (E) a 3 - 300 nm thick oxide layer (OX) is formed, and **in that** the surface (2) provided with the depressions (E) is directly connected to the adhesive.

13. Composite component according to Claim 12, **characterised in that** the depressions (E) are arranged adjoining one another or overlapping one another.

14. Composite component according to any one of Claims 12 or 13, **characterised in that** the depth of the depressions (E) is 3 - 20 µm.

15. Composite component according to any one of Claims 12-14, **characterised in that** the opening diameter (d) of the depressions (E) measured on the surface (2) is on average 40 - 180 µm.

## Revendications

1. Procédé d'activation d'une surface d'une pièce réalisée en un matériau métallique, porteuse sur la surface à activer (2) d'une couche d'oxyde ou d'hydroxyde, pour un collage à un partenaire de liaison, dans lequel procédé des renfoncements (E) sont introduits dans la surface (2) au moyen d'un rayon laser pulsé (X) pour éliminer la couche d'oxyde ou d'hydroxyde (O) présente préalablement sur la surface (2), **caractérisé en ce que** le rayon laser (X) est dirigé sur la surface (2) avec une durée d'impulsion > 0 - 300 ns et sa densité d'énergie nominale mesurée est supérieure à 5,75 J/cm² pour créer une couche d'oxyde (OX) de 30 à 300 nm d'épaisseur dans la zone de fond (G) du renfoncement (E) respectif gravé dans la surface (2) par le rayon laser.

2. Procédé selon la revendication 1, **caractérisé en ce que** les renfoncements (E) sont introduits avec une répartition régulière dans la surface (2).

3. Procédé selon l'une quelconque des revendications précédentes, **caractérisé en ce que** les renfoncements (E) sont introduits de façon à se superposer les uns les autres dans la surface (2).

4. Procédé selon la revendication 3, **caractérisé en ce que** des renfoncements adjacents (E) sont introduits dans la surface (2) de façon à se superposer sur jusqu'à 35 % de leur surface.

5. Procédé selon l'une quelconque des revendications précédentes, **caractérisé en ce que** le diamètre d'ouverture (d) des renfoncements (E) mesuré sur la surface (2) est en moyenne de 40 à 180 µm.

6. Procédé selon l'une quelconque des revendications précédentes, **caractérisé en ce que** la profondeur (T) des renfoncements (E) est de 3 à 20 µm.

7. Procédé selon l'une quelconque des revendications précédentes, **caractérisé en ce que** la densité d'énergie nominale du rayon laser (X) est de 9 à 35 J/cm², en particulier d'au moins 17 J/cm².

8. Procédé selon l'une quelconque des revendications précédentes, **caractérisé en ce que** la pièce (3) est déplacée avec sa surface à activer (2) dans une direction de transport linéaire (F) par rapport à la source laser (1), et **en ce que** le rayon laser (14) introduit les renfoncements (E) en lignes sur la surface (2), lesdites lignes étant orientées dans la direction de transport (F).

9. Procédé selon l'une quelconque des revendications précédentes, **caractérisé en ce que** le rayon laser (X) présente une répartition de densité d'énergie comparable à une courbe de Gauss.

10. Procédé de réalisation d'une liaison adhésive entre des surfaces associées (2) l'une à l'autre de deux pièces (3, 5), dont au moins une est constituée d'un matériau métallique et porte sur sa surface (2) associée à l'autre pièce (5) une couche d'oxyde ou d'hydroxyde,
**caractérisé en ce que**
- la surface (2) de la pièce constituée de matériau métallique (3) est activée d'une façon indiquée par l'une des revendications 1 à 9,
- un revêtement est appliqué facultativement sur la surface activée,
- une colle est appliquée sur une des surfaces (2), et
- les pièces (3, 5) sont assemblées de façon que la surface activée (2) de la pièce (3) constituée de matériau métallique soit directement en contact avec la colle.

11. Procédé selon la revendication 10, **caractérisé en ce qu'**une pièce est une couche de support (5) et l'autre pièce est une couche de revêtement (3) en aluminium pour le plancher d'un véhicule utilitaire, sur la surface libre de laquelle, après assemblage, est constituée une surface de chargement (8) pour une marchandise à transporter par le véhicule utilitaire.

12. Groupement de pièces formée d'au moins deux pièces (3, 5), dont au moins une est constituée d'un matériau métallique, les pièces (3, 5) étant collées au niveau de surfaces (2) associées l'une à l'autre,
**caractérisé en ce que** des renfoncements (E) sont formés dans la surface (2) de la pièce en matériau métallique (3) associée à l'autre pièce (5), au fond (G) desquels est constituée une couche d'oxyde (OX) de 3 à 300 nm d'épaisseur, et
**en ce que** la surface (2) dotée de renfoncements (E) est liée directement par la colle.

13. Groupement de pièces selon la revendication 12, **caractérisé en ce que** les renfoncements (E) sont disposés les uns à côté des autres ou se superposant les uns les autres.

14. Groupement de pièces selon la revendication 12 ou 13, **caractérisé en ce que** la profondeur des renfoncements (E) est de 3 à 20 µm.

15. Groupement de pièces selon l'une quelconque des revendications 12 à 14, **caractérisé en ce que** le diamètre d'ouverture (d) des renfoncements (E) mesuré sur la surface (2) est en moyenne de 40 à 180 µm.
